# EUROPEAN PATENT APPLICATION

(11) **EP 4 576 288 A1**
(43) Date of publication of application: **25.06.2025**
(21) Application number: 23217619.8
(22) Date of filing: 18.12.2023
(51) Int. Cl.: H01M 10/04, H01M 10/42, H01M 50/618, H01M 50/655

(54) **BATTERY CELL TEST SYSTEM AND METHOD FOR TESTING A JELLY ROLL**

(71) Applicant: Customcells Holding GmbH, 25524 Itzehoe (DE)
(72) Inventor: Paulus, Alexander, 25524 Itzehoe (DE); Mahrt, Hein, 25524 Itzehoe (DE)
(74) Representative: LKGLOBAL Lorenz & Kopf Patentanwalt Attorney at Law PartG mbB

(57) **Abstract**

A first aspect of the present disclosure is related to a battery cell test system, comprising:
- a housing configured to host a wound-up electrode stack;
- a first lid configured to be arranged in a variable height in the housing;
- a first external battery contact arranged through the first lid and configured to contact a first electrode of the electrode stack through the first lid.

## Description

### Technical Field

This disclosure is related to battery cell test systems and to methods for testing a jelly roll for a battery cell.

### Background

Testing a battery cell, e.g. for electrical and thermal conditions, involves a series of procedures to evaluate its performance under various scenarios. Electrically, the cell can be tested for voltage, capacity, and internal resistance. Voltage and capacity are measured using a voltmeter and a load, where the cell is discharged at a specific rate to assess how much energy it delivers. Internal resistance, indicative of the cell's efficiency and health, is measured using a multimeter or a specialized battery tester. For thermal testing, the battery is subjected to different temperature conditions to ensure it operates effectively across a range of environments. This includes checking its performance and safety at high and low temperatures, as well as evaluating how it handles thermal stress. Additionally, safety tests like overcharge, short circuit, and thermal runaway are conducted to ensure the battery does not pose a hazard when exposed to extreme electrical or thermal conditions. Testing hardware for such scenarios can become bulky and difficult to maintain. Improvement is desirable.

### Summary

An object of the present disclosure is to improve a testing of battery cells.

This object is solved by the disclosed embodiments, which are defined in particular by the subject matter of the independent claims. The dependent claims provide information for further embodiments. Various aspects and embodiments of these aspects are also disclosed in the summary and description below, which provide additional features and advantages.

A first aspect of the present disclosure is related to a battery cell test system, comprising:
- a housing configured to host a wound-up electrode stack;
- a first lid configured to be arranged in a variable height in the housing;
- a first external battery contact arranged through the first lid and configured to contact a first electrode of the electrode stack through the first lid.

A housing can be a rigid can. It acts as a container for wound-up electrode stack. A housing can generally be made of metal, such as steel or aluminum, to provide a robust and durable enclosure and to efficiently conduct electricity. The can may also be formed of a plastic material.

A wound-up electrode stack can comprise all possible forms of a jelly roll. For example, the battery stack can be cylindrical, in particular with a circular, oval, or elliptic cross-section. Additionally or alternatively the wound-up electrode stack can have an essentially rectangular cross-section, wherein in the latter the curved surface comprises a rather flat surface part and a sharply curved surface part at the edges of the electrode stack in order to achieve a wound-up electrode stack.

A lid, in particular a first lid, can be designed as a cap for the housing. It can be designed in such a way that it covers one or both external battery contacts and seals the interface between the housing and the cover in such a way that pressure and liquid cannot escape from the housing. The lid can be arranged in a variable height on the housing.

An external battery contact, in particular the first external battery contact is a part that is electrically connected to a current collector of the wound-up electrode stack. It forms the electrical interface between the electrode stack in the housing and an external electrical circuit.

With a battery cell test system according to the first aspect, electrode stacks of various form factors can be analyzed and tested effectively.

An embodiment of the first aspect is related to a battery cell test system, wherein the first lid and/or the housing comprises a first relief valve configured to decrease a pressure in the housing.

A pressure-reducing valve functions to decrease the pressure of a fluid (gas or liquid) in a chamber, e.g. to a pre-defined set level. It can operate by balancing an incoming high-pressure fluid from the inside of the battery housing with a control mechanism, such as a spring or diaphragm, which adjusts a flow from inside to outside the housing to maintain a desired lower pressure. A valve of the battery cell test system can be constructed with a metal body, an adjustable spring or diaphragm for pressure control, and a flow control mechanism like a piston or orifice. A valve can be incorporated to a lid, in particular a first lid or a lid that seals the bottom of the battery cell test system. Additionally or alternatively, a valve can also be incorporated to a housing of a battery cell test system.

An embodiment of the first aspect is related to a battery cell test system, comprising:
- a second lid that is configured to be arranged over the first lid and to seal the connection between the second lid and the housing.

In order to provide an additional sealing, a second lid can be configured to be arranged over the first lid. The second lid can also feature a pressure relief valve. In this case the room between the second lid and the first lid can be used for storing fluid that was released from the inner side of the housing through the first lid. This can in particular be advantageous because pressure release from the inner of a housing of a batter cell test system can come with toxic vapors. The second lid can function to retain toxic vapors until they can be safely discharged.

The second cover can also be designed so that the first battery contact protrudes. In case, a second contact is led through the first lid, the second lid can also be configured such that the second battery contact protrudes. Additionally or alternatively, the second lid can be configured such that the first and/or the second battery contact have an electrical connection to the outside of the battery cell test system.

An embodiment of the first aspect is related to a battery cell test system, wherein the first lid and/or the second lid is connected to the housing by a positive-locking connection and/or by a force-locking connection.

A positive-locking or interlocking connection for closing a lid, in particular a first lid and/or a second lid, can involve mechanisms that securely interlock, preventing accidental opening. A positive-locking connection can comprise a latch-and-hook mechanism that may use a spring-loaded latch that snaps onto a catch, ensuring a secure closure. A positive-locking connection can comprise twist locks that align tabs or notches on the lid with container slots, requiring a twist to lock. Other positive-locking connections may be possible.

Force-locking connections for closing lids rely on applied force rather than interlocking shapes. The first and/or second cover can be connected to the housing by a screw connection. A screw connection can in particular be used to adjust a height of the lid in the housing. Thereby, different types of wound-up electrode stacks can be housed in the battery cell test system. The first lid can in particular be screwed into the housing thereby reducing the height at which the lid is arranged in/on the housing. On the same time, the lid can provide a certain mechanical pressure to the electrode stack. This can in particular be a pre-defined pressure. A pre-defined pressure can be reached by observing the actual pressure by a sensor. Then a user can further screw the lid into the housing, if the pressure applied to the lid by the electrode stack is too small and/or indicates that the inner side of the lid has not yet reached the electrode stack inside the housing. Additionally or alternatively, the sensor can command a servo motor that closed the lid by screwing it automatically into the housing and vice versa.

An embodiment of the first aspect is related to a battery cell test system, wherein the second lid is mounted on a pivot rod external to the housing, such that the lid can be arranged over the housing by rotation.

This can be done to facilitate the application of the second lid. Also the first lid can be mounted on a pivot rod.

An embodiment of the first aspect is related to a battery cell test system, comprising:
- a third lid that is configured to seal an opening on the housing opposite to the opening closed by the first lid;
- a second external battery contact configured to be connected to the second electrode through the third lid.

In case a first lid (and potentially a second lid) is applied on top of a housing, a third lid can be applied to a bottom of the housing. A second lid can be in principle designed similar to a first lid. It can comprise a sealing and a pressure relief valve. Furthermore, it may comprise a second external battery contact that goes through the second lid and forms the electrical interface between the electrode stack inside the housing and external electrical circuits, in particular for testing and analyzing the electrode stack.

An embodiment of the first aspect is related to a battery cell test system, wherein the third lid can be arranged at a variable height in the housing.

In particular when a pre-define pressure should be applied on the bottom of an electrode stack, e.g. to a current collector, it can be advantageous to adjust the pressure by the third lid, i.e. a lid on the bottom of the housing. This allows to adjust the pressure with high accuracy to the bottom of the electrode stack. An embodiment of the first aspect is related to a battery cell test system, wherein the third lid is connected to the housing by a positive-locking connection and/or by a force-locking connection.

The third lid can be connected to the housing in the same way as the first and/or the second lid.

An embodiment of the first aspect is related to a battery cell test system, wherein the first lid and/or the third lid are connected to the housing via a connection-system such that the first lid and/or the third lid are connected to the outside of the housing.

This makes the inside of the housing smooth and easy to clean from steam and electrolyte contamination. In one alternative, a first lid (at a top) and/or a third lid (at a bottom) can be screwed to the housing by a thread that is arranged on the outside of the housing. That means the lid is screwed onto the housing and its threaded sides force-lock with the thread on the outside of the housing.

An embodiment of the first aspect is related to a battery cell test system, wherein the first external battery contact and a second external battery contact exits the system through the first lid and/or through the third lid.

This means, both battery contacts, the battery contact that connects to the anode and the battery contact that connects to the cathode are led to the outside through the same lid, i.e. either a first lid (e.g. a lid on the top of the housing) or a third lid (e.g. a lid on the bottom of the housing) or both. This may simplify testing applications as it is possible to receive both poles from a single side.

An embodiment of the first aspect is related to a battery cell test system, wherein the first battery contact and/or the second battery contact is cramped and/or welded to the current collectors of the respective electrode of the electrode stack.

This can be done in order to reduce the ohmic resistance of the connections. In particular a current collector can be folded over a collector disc of an external battery contact such that it a connection area is increased. A collector disc can be a part at the end of a battery contact configured to make electrical contact with the current collector of an electrode stack. To further improve the electrical connection, the connected areas can be welded together.

An embodiment of the first aspect is related to a battery cell test system, wherein the first battery contact and/or the second battery contact is movable towards the respective current collector of the electrode stack independently of the respective lid to which they are attached.

This means a first and/or a battery contact can be attached the respective current collectors, e.g. they can be crimped, welded, stapled, and/or screwed to the current collector. Afterwards in particular an electrolyte can be poured into the housing. In particular if the contacts are welded to the current collector providing the electrolyte to the electrode stack before the welding is hardly possible, since a welding operation should not be conducted in the vicinity of an electrolyte. After an electrolyte has been provided the first lid and/or the second lid are closed.

A second aspect of the present disclosure is related to a method for testing a wound-up electrode stack for a battery cell,
comprising the steps:
- arranging an electrode stack in a housing of a test system;
- contacting a first current collector of a first electrode of the electrode stack;
- contacting a second current collector of a second electrode of the electrode stack;
- closing the housing with a first lid.

After the electrodes are contacted and the lids are closed, in particular with a pre-defined pressure being exerted on the electrode stack and/or the current collectors, a testing of the electrode stack can begin. A testing can comprise different electrical, thermal, and mechanical parameters.

An embodiment of the second aspect is related to a method for testing a wound-up electrode stack for a battery cell,
comprising the step:
- filling an electrolyte into the housing after closing the first lid.

In case the housing is closed by two lids, a first lid and a second lid, the first lid can be closed, and the electrolyte can be provided through the opening for the second lid. After the electrolyte is provided, the second lid can also be closed.

### Brief description of the figures

Further advantages and features result from the following embodiments, some of which refer to the figures. The figures do not always show the embodiments to scale. The dimensions of the various features may be enlarged or reduced, in particular for clarity of description. For this purpose the figures are at least partially schematized.
Fig. 1 illustrates a battery cell test system according to an embodiment of the present disclosure.
Fig. 2 illustrates a battery cell test system according to an embodiment of the present disclosure.
Fig. 3 illustrates a method for testing jelly rolls for battery cells according to an embodiment of the present disclosure.

In the following description reference is made to the accompanying figures which form part of the disclosure, and which illustrate specific aspects in which the present disclosure can be understood. Identical reference signs refer to identical or at least functionally or structurally similar features.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise.

### Detailed description

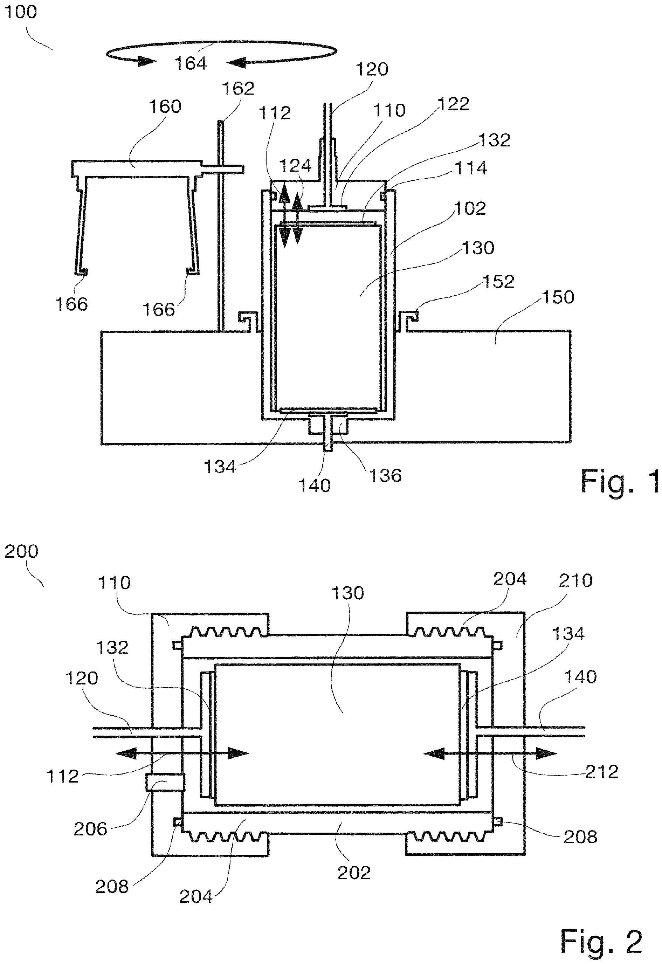

Fig. 1 illustrates a battery cell test system 100 according to an embodiment of the present disclosure. The battery test system has two lids on a single side of the housing.

The housing 102 is arranged in a plastic stand 150. On top of the housing a first lid 110 is arranged. The first lid is movable into a vertical direction 112 of the battery cell test system. The first lid is sealed to the housing with a rubber seal 114 incorporated into the first lid.

A cathode battery contact 120 is formed through an opening of the first lid 110. The cathode battery contact comprises a collector disc 122 that is configured to be directly contacted to the cathode current collector 132. The battery contact is independently movable through the first lid (the movable arrangement is sealed). In other words, the cathode battery contact 120 can be connected to the cathode current collector 132 and afterwards the first lid 110 can be slipped over the battery contact 120. The lid can then apply a pre-defined pressure to the battery contact, the cathode current collector, and in particular the jelly roll. The cathode battery contact 120 is configured to move in a direction 124 within the first lid. The cathode battery contact can also function via a cable that can be removed before the sealing lid is placed over it and then reconnected to the intermediate contact of the sealing lid [KOMMENTAR: Diesen Satz verstehe ich nicht.].

Arranged in the housing 102 can be various types of jelly rolls 130 for testing. The jelly rolls can differ in their form factors. The movable lid and cathode battery contact allow for jelly rolls with different heights. On the top side the cathode of the jelly roll is connected to the cathode current collector 132, which was already mentioned. On the bottom side of the jelly roll, the anode of the jelly roll is connected to the anode current collector 134. The housing 102 has an opening 136 on the bottom. Through the opening an anode battery contact 140 is formed. The anode battery contact is directly attached to the anode current collector 134.

A second lid 160 is arranged on the top of the housing. The second lid is arranged on a pivotal rod 162 and is movable in a rotational direction 164 to place the second lid over the battery housing. The second lid is configured to provide additional safety against evaporating fumes and gases. Therefore, the second lid is positively locked by clamps 166 which are configured to locked to corresponding clamps 152 formed on the plastic holder 150. The sealing anchors on the plastic holder are used to secure the sealing lid, creating a final seal of the cell. Both the lid and the sealing lid have a pressure relief valve (not depicted).

Fig. 2 illustrates a battery cell test system 200 according to an embodiment of the present disclosure. The system comprises a housing 202 with external threads 204 on both sides. On the left side, a first lid 110 is screwed onto the housing 202. On the right side, a second lid 210 is screwed onto the housing. By the threaded connection, the first lid can be arranged in various positions along the dimension 112. The same can be done with the second lid 210 along the dimension 212.

Inside the housing various types of jelly rolls 130 can be arranged. A jelly roll has a cathode current collector 132 and an anode current collector 134. The orientation of the jelly roll can be changed, such that the location of anode and cathode current collectors are switched. Pressure in the housing can be released through the pressure relief valve 206. Furthermore, the threaded connections to the lids are sealed by seal rings 208, which are arranged in the housing (and/or alternatively in the lids).

Through the first lid, a cathode battery contact 120 is formed. And through the second lid, an anode battery contact 140 is formed. Both contacts are independently movable from the lids, such that both contacts 120, 140 can be welded to their respective current collectors on the jelly roll before the lids are closed. This has the advantage, that the battery contacts can be welded to the current collectors and, then a first lid ca be closed, an electrolyte can provide and then the other lid is closed.

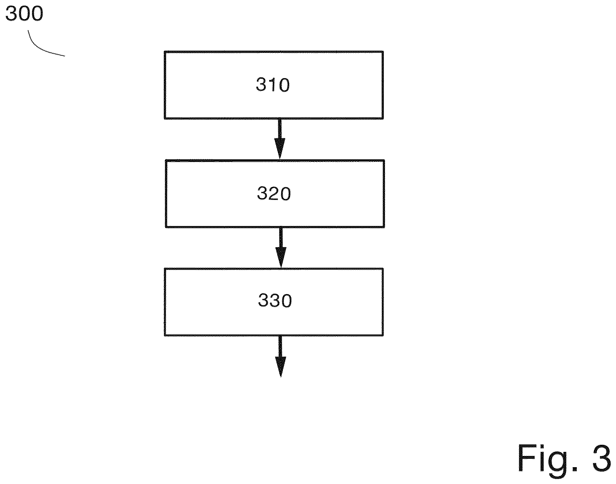

Fig. 3 illustrates a method 300 for testing jelly rolls for battery cells. A testing can comprise a testing or analyzing of various electrical and/or thermal parameters of the cell, such as voltage, current, internal resistance, internal capacity, internal inductivity, rate of energy provision, heat generation, gas generation, etc. In a first step 310, a jelly roll is arranged in the housing of a battery cell test system. In a second step 320 one or both current collectors of the electrode stack are contacted. For example, the current collectors are folded over a collector disk of a respective battery contact. Both parts are then welded together to decrease an ohmic resistance of the connection. In a next step 330 one or both lids are closed such that they are adapted to the jelly roll. This can be done in particular to emulate the tight housing of a jelly roll in a real battery assembly. Before the lid is closed an electrolyte can be provided to the jelly roll. However, if the battery cell test system has one lid on each side, a first lid can be closed, then an electrolyte can be provided through the opening for the second lid, and finally the second lid can be closed as well.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of reference signs

- 100: battery cell test system
- 102: housing
- 110: first lid
- 112: movable dimension of first lid
- 114: rubber seal
- 120: cathode battery contact
- 122: collector disc of battery contact
- 124: movable dimension of cathode battery contact
- 130: jelly rolls
- 132: current collector cathode
- 134: anode current collector
- 136: opening for battery contact
- 140: anode battery contact
- 150: plastic stand
- 152: clamp
- 160: second lid
- 162: pivot rod
- 164: movable dimension of second lid
- 166: clamp
- 200: battery cell test system
- 202: housing
- 204: outer thread
- 206: valve
- 208: seal ring
- 210: second lid
- 212: movable dimension of second lid
- 300: testing method
- 310: arranging jelly roll
- 320: contacting current collector
- 330: closing lid

## Claims

1. Battery cell test system (100),
comprising:
- a housing (102) configured to host a wound-up electrode stack (130);
- a first lid (110) configured to be arranged in a variable height in the housing;
- a first external battery contact (120) arranged through the first lid and configured to contact a first electrode (132) of the electrode stack through the first lid.

2. The battery cell test system
wherein the first lid (110) and/or the housing (102) comprises a first relief valve (206) configured to decrease a pressure in the housing.

3. The battery cell test system according to one of the preceding claims, comprising:
- a second lid (160) that is configured to be arranged over the first lid (110) and to seal the connection between the second lid and the housing (102).

4. The battery cell test system according to one of the preceding claims, wherein the first lid (110) and/or the second lid (160) is connected to the housing (102) by a positive-locking connection (152, 166) and/or by a force-locking connection.

5. The battery cell test system according to one of the preceding claims, wherein the second lid (160) is mounted on a pivot rod (162) external to the housing (102), such that the lid can be arranged over the housing by rotation.

6. The battery cell test system according to one of the preceding claims, comprising:
- a third lid (210) that is configured to seal an opening on the housing (202) opposite to the opening closed by the first lid (110);
- a second external battery contact (140) configured to be connected to the second electrode (134) through the third lid.

7. The battery cell test system according to the preceding claim,
wherein the third lid (210) can be arranged at a variable height in the housing (202).

8. The battery cell test system according to one of the preceding two claims, wherein the third lid (210) is connected to the housing (202) by a positive-locking connection and/or by a force-locking connection (204).

9. The battery cell test system according to one of the preceding claims, wherein the first lid (110) and/or the third lid (160) are connected to the housing via a connection-system (204) such that the first lid and/or the second lid are connected to the outside of the housing (202).

10. The battery cell according to one of the preceding claims,
wherein the first external battery contact and a second external battery contact exits the system through the first lid (110) and/or through the third lid (210).

11. The battery cell system according to one of the preceding claims,
wherein the first battery contact (120) and/or the second battery contact (140) is cramped and/or welded to the current collectors (132, 134) of the respective electrode of the electrode stack (130).

12. The battery cell system according to one of the preceding claims,
wherein the first battery contact (120) and/or the second battery contact (140) is movable towards the respective current collector (132, 134) of the electrode stack (130) independently of the respective lid (110, 210) to which they are attached.

13. Method for testing a wound-up electrode stack,
comprising the steps:
- arranging an electrode stack (130) in a housing (102) of a test system;
- contacting a first current collector (132) of a first electrode of the electrode stack;
- contacting a second current collector (134) of a second electrode of the electrode stack;
- closing the housing with a first lid (110).

14. The method according to the preceding claim,
comprising the step:
- filling an electrolyte into the housing (102) after closing the first lid (110).
